# EUROPEAN PATENT APPLICATION

(11) **EP 0 677 964 A2**
(43) Date of publication of application: **18.10.1995**
(21) Application number: 94403006.3
(22) Date of filing: 23.12.1994
(51) Int. Cl.: H04N 7/24

(54) **HDTV Viterbi decoder**

(30) Priority: 12.04.1994 KR 9407628; 12.04.1994 KR 9407629; 12.04.1994 KR 9407630
(71) Applicant: LG ELECTRONICS INC., Seoul (KR)
(72) Inventor: Nam, Ho Jun, Seoul (KR); Kwak, Heung Sik, Seongnam-si, Kyungki-do (KR); Heo, Seo Won, Seoul (KR)
(74) Representative: Chameroy, Claude

(57) **Abstract**

An HDTV Viterbi decoder that decodes signals received from a vestigial side band transmission system which can be operated with the same speed as the symbol rate.

## Description

### FIELD OF THE INVENTION

This invention relates to an HDTV Viterbi decoder that decodes signals received from vestigial side band transmission system transmitted through a transmission channel, more particularly to an HDTV Viterbi decoder that can be operated in the same speed with the symbol rate.

### DESCRIPTION OF PRIOR ART

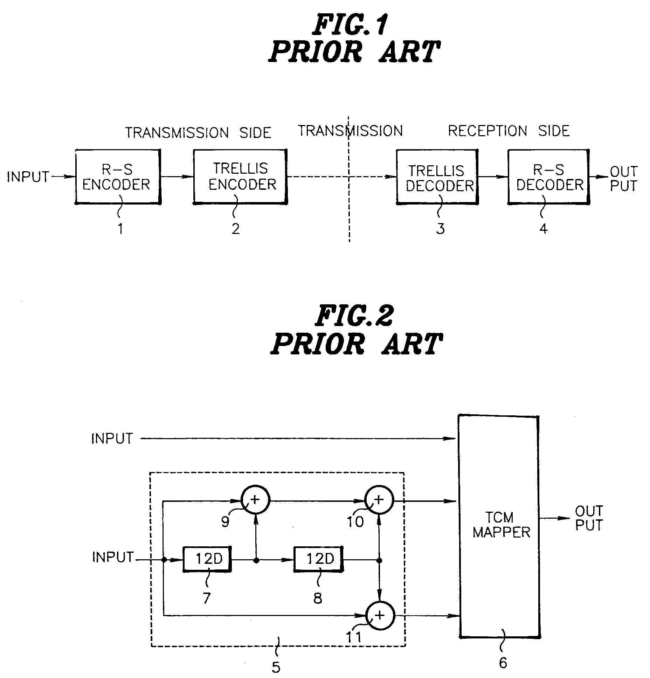

Recently, the GA(Grand Alliance) of the US has decided to adopt 8VSB(Vestigial Sideband) transmission system as shown in FIG.1 as the HDTV transmission system, which uses a Reed-Solomon encoder 1 and a Trellis encoder 2 for channel coding.

That is, as shown in FIG.1, the 8VSB transmission system carries out coding and decoding of data with a channel coding system at the transmission side thereof having a R-S(Reed-Solomon) encoder 1 for carrying out R-S encoding of input data and a Trellis encoder 2 for carrying out Trellis encoding of the data received from the R-S encoder 1, and a channel decoding system at the reception side thereof having a Trellis decoder 3 for carrying out Trellis decoding of the input data and a R-S(Reed-Solomon) decoder 4 for carrying out R-S decoding of the data received from the Trellis decoder 3.

Terrestrial VSB transmission mode uses a Trellis code of 2/3 ratio.

That is, when a 2 bit signal is received, 1 bit out of the received 2 bit signal is encoded into 2 bits using a 1/2 convolution code, leaving the rest 1 bit uncoded.

Therefore, a signal pattern using Trellis code has 8 levels in 3 bits, and the signal transmitted in 8 levels is called '8 VSB'.

And, as shown in FIG.2 in case of the 8 VSB system, the Trellis encoder 2 includes a convolution encoder 5 and a TCM(Trellis Coded Modulation) mapper 6, thereby, out of the 2 bit signal, applies 1 bit to the TCM mapper 6 in uncoded condition and the rest 1 bit, encoded into 2 bits through the convolution encoder 5, to the TCM mapper 6 for the TCM mapper 6 to transmit the received signal after carrying out a TCM mapping of the received signal.

The convolution encoder 5 includes memories 7 and 8 connected in series for delaying input signals by 12 symbol units respectively, an adder 9 for adding the input signals to the output signals of the memory 7, an adder 11 for adding the input signals to the output signals of the memory 8 and applying the added signals to the TCM mapper 6, and an adder 10 for adding the output signals of the adder 9 to the output signals of the memory 8 and applying the added signals to the TCM mapper 6, thereby, by delaying the rest 1 bit at the memories 7 and 8 by 12 symbols respectively and adding at the adders 9, 10, and 11, encodes the rest 1 bit into 2 bits and applies the encoded 2 bits to the TCM mapper 6.

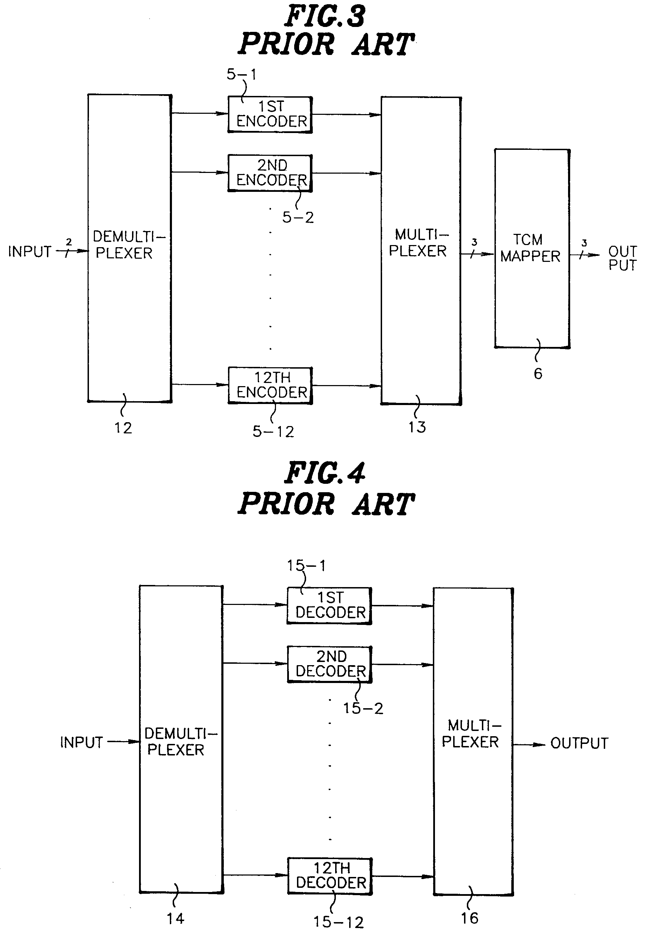

As shown in FIG.3, the concept of the Trellis encoder 2 is like transmitting signals using 12 Trellis encoders connected in parallel.

That is, as shown in FIG.3, the concept is like providing the convolution encoder 5 that includes 12 encoders 5-1 to 5-12, together with a demultiplexer 12 and a multiplexer 13 for carrying out demultiplexing and multiplexing of input and output signals respectively.

As has been explained, since the input signals are stored in the memories by 12 symbol units, of the input symbols, a 1st, a 13th, a 25th, ···, symbol signals are applied to a first encoder 5-1, a 2nd, a 14th, a 26th, ···, symbol signals are applied to a second encoder 5-2, a 3rd, a 15th, a 27th, ···, symbol signals are applied to a third encoder 5-3, and so on, and an 11th, a 23rd, a 35th, ···, symbol signals are applied to an 11th encoder 5-11, and a 12th, a 24th, a 36th, ···, symbol signals are applied to a 12th encoder 5-12, respectively.

In order to restore the input data encoded at the transmission side using the convolution encoder as shown in FIG.3, a Trellis decoder as shown in FIG.4 is used at the reception side.

As shown in FIG.4, the Trellis decoder is a device for restoring and transmitting input data encoded through the Trellis encoder; one that carries out an operation for reversing the operation of the Trellis encoder, that requires, like the Trellis encoder, 12 convolution decoders 15-1 to 15-12, a demultiplexer 14, and a multiplexer 16.

Viterbi algorithm is used for restoring the convolution encoded data of FIG.3.

Since data convolution encoded at the present time at the convolution encoder depends on data convolution encoded previously, all the output data convolution encoded through the convolution encoder can not be the output values of the convolution encoder, but only the wave patterns that have been qualified based on the previous input values, i.e., the pre state can be the output values, Thus, the Viterbi decoder presumes the most probable input value through observing the input wave patterns applied from the reception side.

That is, Viterbi algorithm presumes the optimal input value with a method of saving only one survival path while erasing the rest one path within one state, in case four states of 00, 10, 01, 11 are occurred for a 2 bit input signal and two paths are met at each state, since the optimal paths from the next stage on will be identical.

Therefore, Viterbi algorithm includes a process for computing a survival path out of two paths meeting at each state in every observation region and a process for memorizing histories of the survival paths in every state.

In order to presume the optimal survival path, though wave patterns should be observed for unlimited region, but in order to simplify the hardware system, wave patterns for a limited region are observed, the optimal path within the observed region is selected, and the input value for the optimal path is taken.

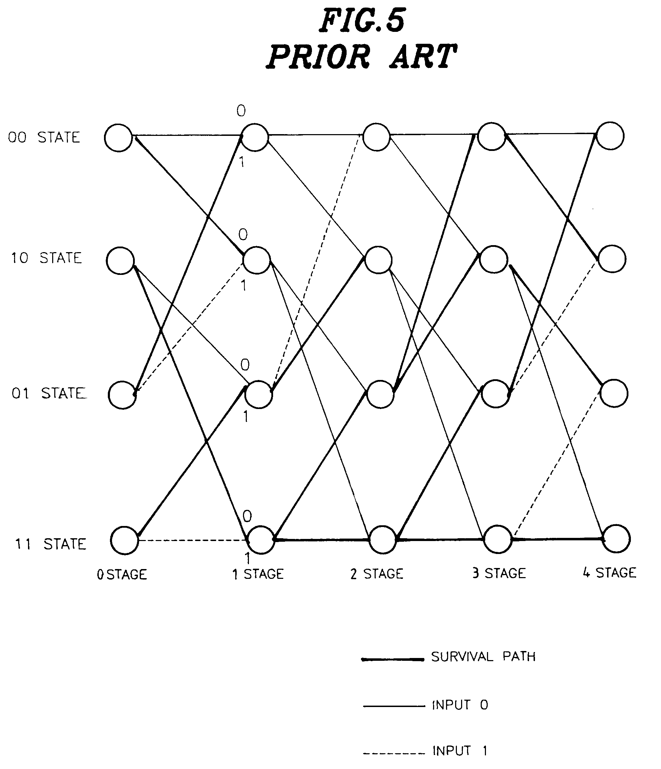

Referring to FIG.5 showing a Trellis diagram, 00, 10, 01, 11 states are occurred for each region for a 2 bit input signal, and two paths are met at each state.

That is, paths of a 00 state and a 01 state of a zeroth observation region are met at a 00 state of a first observation region, paths of the 00 state and the 01 state of the zeroth observation region are met at an 10 state of the first observation region, paths of the 10 state and an 11 state of the zeroth observation region are met at the 01 state of the first observation region, and paths of the 10 state and the 11 state of the zeroth observation region are met at the 11 state of the first observation region.

Thus, that two paths are met at each state is consistently established for every stage.

In this instant, the two paths meeting at each state have data values of 0 and 1.

Herein, it is assumed that a path applied from above is zero, and a path applied from below is 1 at each state.

The survival path should be determined by selecting one path while erasing the remaining one path of the two paths meeting at each state, whereas, as shown in FIG.5, the 00 state path of input zero of the zeroth observation region and the 01 state path of input 1 of the zeroth observation region are met at the 00 state of the first observation region, of which the 01 state path of input 1 applied from below is taken as a survival path.

The 10 state path of input zero of the zeroth observation region and the 11 state path of input 1 of the zeroth observation region are met at the 01 state of the first observation region, of which the 11 state path of input 1 applied from below is taken as a survival path.

The 00 state path of input zero of the first observation region and the 01 state path of input 1 of the first observation region are met at the 00 state of the second observation region, of which the 11 state path of input zero applied from above is taken as a survival path.

Thus, by obtaining survival paths for every state in each region within an observation region, and selecting the optimal path of the observation region from the survival paths, an input value of an optimal path can be obtained.

That is, in Viterbi algorithm, of the two input transition paths for each state, a path having shorter Euclidean distance, i.e., highly probable to occur is saved while the remaining path is erased.

At repeating the foregoing process in the following stages, saving survival paths only, the original bits before being encoded at the transmission side can be found.

That is, the basic concept of Viterbi algorithm is that a signal received at the present time is compared to all the signals probable to receive on the Trellis diagram and, by observing the resultant together with a resultant for a certain period of time, a signal that is the most probable to receive is selected. By doing so, it is possible to restore exact originally transmitted data even though the original data of the input signal has been damaged due to noise.

Though the observation region is limited within a certain range, it is very hard to select value of one decoded bit through comparing and analyzing the resultants for observation stages within a certain range on the whole.

And, since a HDTV receiver requires a symbol rate of 10.76M symbol/sec, a system that could have embodied Viterbi algorithm up to now requires very complicated comparison and discrimination memories and logic that should use a separate clock over 10 to 80 times faster than the data symbol rate per second, but actually the embodiment has been very difficult, and since the HDTV receiver requires 12 Viterbi decoders, the embodiment has been very complicated.

Further, an existing Viterbi decoder is not suitable to use in an HDTV because the coding standard of existing Viterbi decoder is different with that of the HDTV decoder, and available operation speed of the existing Viterbi decoder is from several hundreds Kbps to several Mbps, whereas the HDTV requires a symbol rate of 10 M Symbol/sec.

### SUMMARY OF THE INVENTION

The object of this invention for solving the foregoing problem is to provide an HDTV Viterbi decoder that can be operated at the same operation speed with the data symbol rate only with memory elements, multiplexers, and other additional logic.

These and other objects and features of this invention can be achieved by providing an HDTV Viterbi decoder including, a metric computing means for computing differences of an input signal with values of each branch and computing a metric value and finding a survival path by adding the computed differences to an accumulated previous metric value, an optimal path computing means for finding an optimal survival path within an observation region from the metric values computed at the metric computing means, and a path history computing means for successively transferring an output value found by passing the survival paths found at the optimal path computing means through a look-up table up to a final stage within the observation region under the control of the survival path, and taking a value corresponding to the optimal survival path out of the transferred values as the final value of the optimal path within the observation region, and alternatively by providing an HDTV Viterbi decoder including, a metric computing means for computing differences of an input signal with values of each branch and finding survival paths by adding the computed differences to an accumulated previous metric value, an optimal path selection means for finding an optimal survival path within a observation region from the metric value applied from the metric computing means, and a path history computing means for determining an output value of the observation region based on a pre state value and the present state value of each stage based on survival path information received from the metric computing means and the optimal survival path information received from the optimal path selection means.

### BRIEF DESCRIPTION OF THE DRAWINGS

FIG.1 is a basic block diagram of a general TCM transmission.

FIG.2 is a general Trellis encoder system.

FIG.3 is a schematic illustration of a conventional Trellis encoder system.

FIG.4 is a schematic illustration of a conventional decoder system opposed to the conventional Trellis encoder system.

FIG.5 is a diagram of a general Trellis decoder.

FIG.6 is a Viterbi decoder system in accordance with one embodiment of this invention.

FIG.7 is a system detail of one embodiment of the metric computing part of FIG.6.

FIG.8 is a system detail of the optimal path computing part of FIG.6.

FIG.9 is a system of the path history computing part of FIG.6.

FIG.10 is a system detail of the path history computing part of FIG.6.

FIGs.11 and 12 explain operation of the path history computing part of FIG.10.

FIG.13 is a system detail of other embodiment of the metric computing part of FIG.6.

FIG.14 is a system detail of the accumulator of FIG.13.

FIG.15 is a Viterbi decoder system in accordance with other embodiment of this invention.

FIG.16 is a system detail of the metric computing part of FIG.15.

FIG.17 is a system detail of the path history computing part of FIG.15.

FIG.18 is decoder diagram for explaining this invention.

FIGs.19A - 19E explain operation of the path history computing part of FIG.17.

### DETAILED DESCRIPTION OF THE PREFERRED EMBODIMENTS

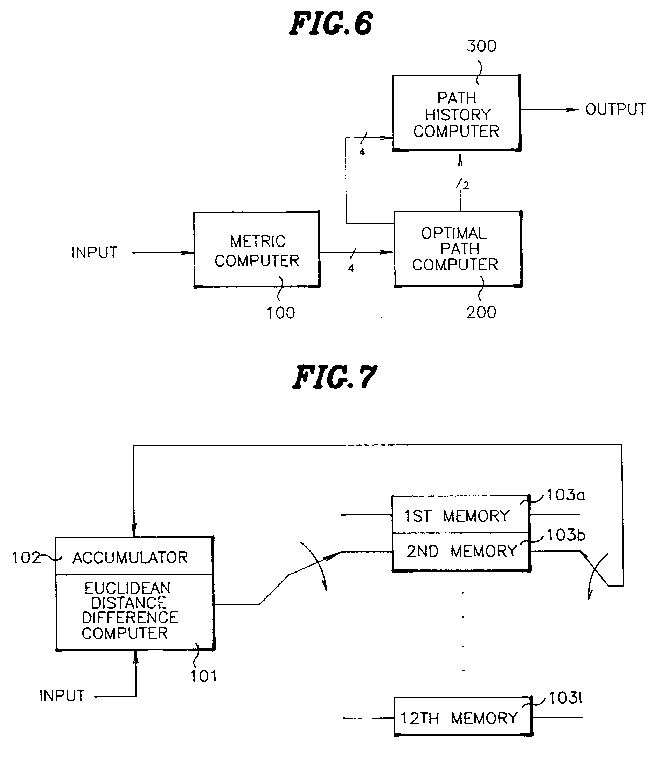

As shown in FIG.6, a HDTV Viterbi decoder in accordance with one embodiment of this invention includes a metric computing part 100, an optimal path computing part 200, and a path history computing part 300.

The metric computing part 100 finds differences of an input signal with each of branch values and finds a metric value and a survival path by adding the differences to a previously accumulated metric value. That is, when the input signal is applied to the Viterbi decoder, the metric computing part 100 finds differences of the input signal with each of branch signals classified by each state shown on the Trellis decoder diagram of FIG.5 and adds the found differences to Euclidean distances, i.e., to a metric value up to the present time. Herein, the metric computing parts 100 are arranged classified by each state.

The optimal path computing part 200 finds an optimal survival path within an observation region from the metric values found at the metric computing part 100. That is, the optimal path computing part 200 finds the optimal survival path by saving only one path while erasing the other path out of the two paths applied classified by each state using metric values computed and stored in advance at the metric computing part 100 for every path.

The path history computing part 300 successively transfers the output values found by passing the survival paths found at the optimal path computing part 200 through a look-up table up to a final stage within the observation region under the control of the survival paths, and obtains a value corresponding to the optimal survival path out of the transferred values as the final value of the optimal path.

As shown in FIG.7, one embodiment of the metric computing part 100 includes an Euclidean distance difference computer 101 for computing differences of the input signal with each of branch signal, an accumulator 102 for accumulating metric values, and a plurality of memories 103a to 1031 for adding outputs of the Euclidean distance difference computer 101 to a previous metric value and applying the added value to the optimal path computing part 200 and the accumulator 102.

Herein the plurality of memories 103a to 1031 includes 12 memories 103a to 1031 for storing outputs of the Euclidean distance difference computer 101 for 12 periods.

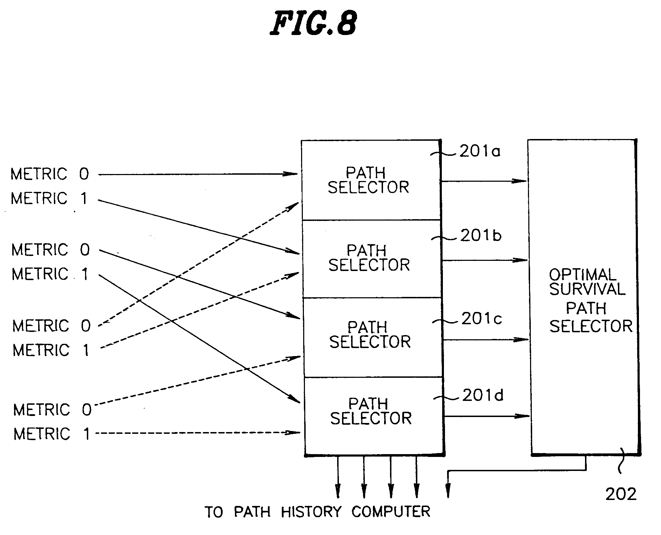

As shown in FIG.8, the optimal path computing part 200 includes a plurality of path selectors 201a to 201d each for selecting a path having smaller metric value as a survival path by comparing the two metric values received from the metric computing part 100, and an optimal survival path selector 202 for selecting a path having the smallest metric value by comparing the outputs applied from the plurality of path selectors 201a to 201d.

Herein, the path selectors 201a to 201d are arranged classified by each state.

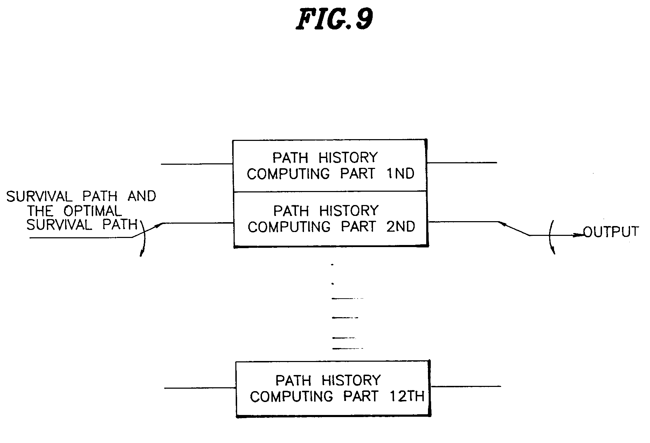

As shown in FIG.9, the path history computing part 300 includes 12 blocks having the same function connected in parallel for being selected according to a multiplexing function, thereby the 12 blocks are selected in serial order and the output of the path history computing part is the final output of the optimal path within the observation region.

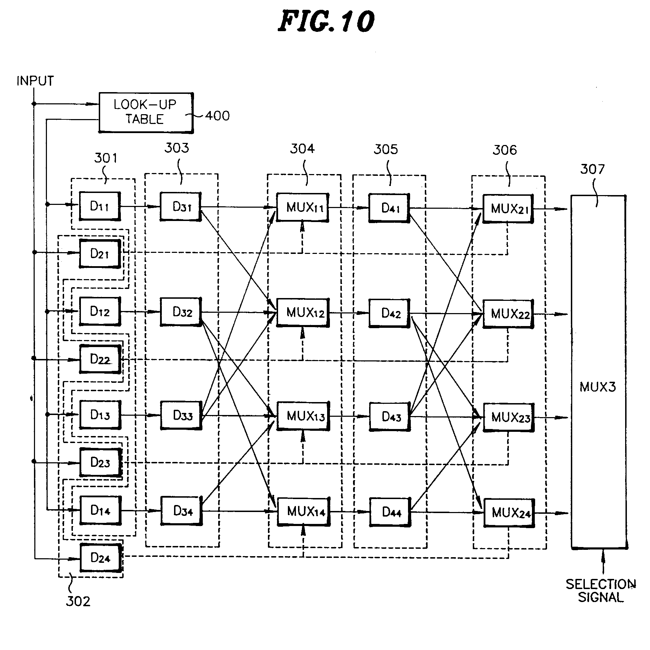

As shown in FIG.10, the path history computing part 300 includes a plurality of memory blocks 301 for storing output values obtained by passing the survival paths applied from the optimal path computing part 200 through a look-up table in serial order, a plurality of moving direction changing multiplexers 304 and 306 for changing moving direction of information stored in the memory blocks 301 under the control of the survival path information applied from the optimal path computing part 200, and a multiplexer 307 for transmitting a final output value of the optimal path within the observation region of the outputs of the last stage multiplexers 306 out of the moving direction changing multiplexers under the control of the survival path information applied from the optimal path computing part 200.

Herein, the path history computing part 300 may further includes a plurality of survival path information storing buffers 302 for having the survival path information applied from the optimal path computing part 200 stored therein and applied to the selection terminal of the plurality of moving direction changing multiplexers 304 and 306, and still further may includes a plurality of delaying parts 303 for having the outputs of the memory blocks 301 stored in serial order therein and applied to the plurality of moving direction changing multiplexers 304.

Herein, the survival path information storing buffers 302 are arranged classified by each state, and the delaying parts 303 has 12 FIFO(First In and First Out) type latches classified by each state D31-D34 and D41-D44.

And the memory blocks 301 has a plurality of buffers D11-D14 and D41-D44 arranged one to one matched with each state and stage.

In order to explain operation of the HDTV Viterbi decoder in accordance with one embodiment of this invention, when it is assumed that a Trellis encoder having one uncoded bit and two memories to the HDTV standard of GA is as shown in FIG.2, a Trellis diagram for the given encoders will be a system having four states as shown in FIG.5.

Accordingly, the one embodiment of the HDTV Viterbi decoder in accordance with this invention will have metric computing parts 100 classified by each state, and the Euclidean distance difference computers 101 in each of the metric computing part 100 finds differences of the input signal value with each of branch signal values on the Trellis decoder diagram known in advance.

These are the Euclidean distance values, and the Euclidean distance difference computer 101, adding this found Euclidean distance value to the previous value stored in the memories 103a to 1031, applies to the optimal path computing part 200, feeds back to the accumulator 102, and adds to the previous metric value having been accumulated.

And, as the metric computing part 100 serves the same function with the Trellis decoder of FIG.4 and has the same system, as shown in FIG.7, the metric computing part 100 has only one accumulator 102 and 12 memories 103a to 1031 for storing them for 12 periods.

Meantime, the metric values two per one state received from the metric computing part 100 are applied to the path selectors 201a to 201d classified by each state, wherein the metric values are compared to the two input metric values, a path having smaller metric value, i.e., a path having a higher probability of occurrence being selected as a survival path, applied to the path history computing part 300 and the optimal survival path selector 202.

The paths selected thus are applied to the optimal survival path selector 202 to be compared with metric values of each state and a path having the smallest metric value to be selected as an optimal survival path, and applied to the path history computing part 300.

And the path history computing part 300 finds the final value from the optimal path within the observation region using survival path information and the optimal survival path information applied from the optimal path computing part 200, wherein the buffers D11 to D14 store the output values obtained by passing the survival path information applied from the optimal path computing part 200 through the look-up table and the survival path information storing buffers D21 to D24 store the survival path information applied from the optimal output computing part 200.

And the outputs of the buffers D11 to D14 are rearranged in the delaying part D31 to D34 and D41 to D44 under the control of the moving direction changing multiplexers MUX11 to MUX14 and MUX21 to MUX24 controlled by the outputs of the survival path information storing buffers D21 to D24, and the finally delayed values of the delaying part D31 to D34 and D41 to D44 selected by the moving direction changing multiplexers MUX11 to MUX14 and MUX21 to MUX24 are selected and transmitted by the multiplexer 307 according to the optimal survival path information of the optimal path computing part 200.

That is, this is a configuration in concept that one buffer presented between the moving direction changing multiplexers MUX21 to MUX24 and the multiplexer 307 has the outputs of the moving direction changing multiplexers MUX21 to MUX24 transmitted after storing them temporarily therein.

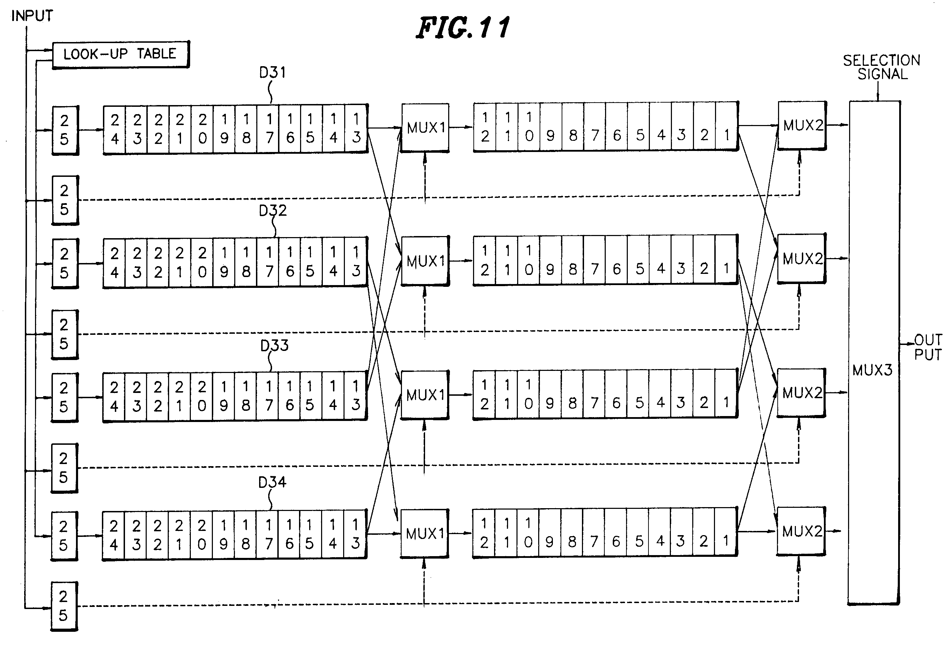

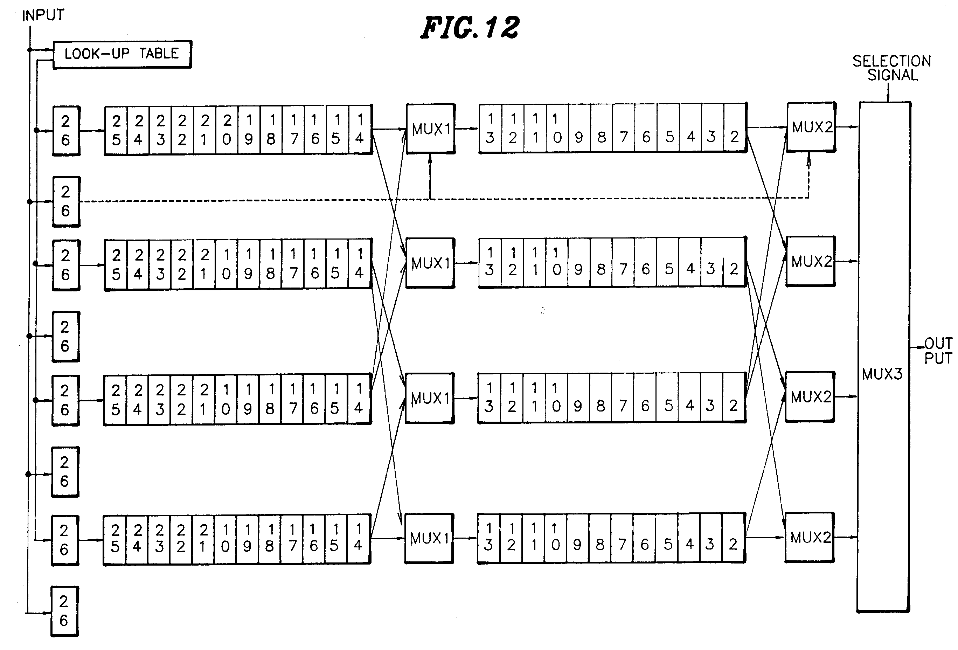

To help understanding, operation of the path history computing part 300 is to be explained hereinafter, referring to FIGs.11 and 12.

First, as shown in FIG.11, the 25th survival path information is stored in the survival path information storing buffers D21 to D24, the 25th output obtained by passing the 25th survival path through a look-up table is stored in the buffers D11 to D14 and delayed at the delaying parts D31 to D34, and the 13th output and the first output are aligned and processed by the moving direction changing multiplexers MUX11 to MUX14 and MUX21 to MUX24 controlled by the outputs of the survival path information storing buffers D21 to D24.

And, in this instant, the configuration of the values of the multiplexer and the demultiplexer moved for one unit time period are as shown in FIG.12.

Now, as shown in FIG.12, the 26th survival path information is stored in the survival path information storing buffers D21 to D24, the 26th output obtained by passing the 26th survival path through a look-up table is stored in the buffers D11 to D14 and delayed at the delaying parts D31 to D34, and the 14th output and the second output are aligned and processed by the moving direction changing multiplexers MUX11 to MUX14 and MUX21 to MUX24 controlled by the outputs of the survival path information storing buffers D21 to D24.

That is, by processing in this way continuously, the 12 decoder system of FIG.4 can be embodied with one decoder system.

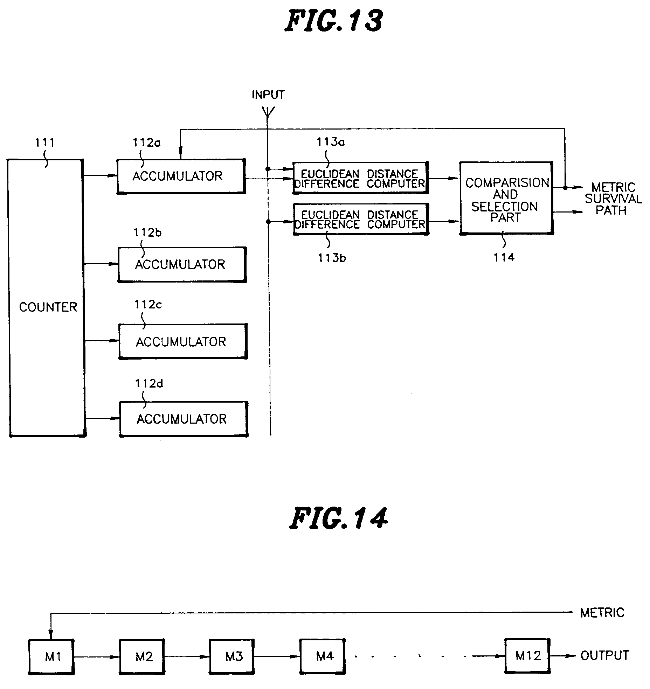

As shown in FIG.13, other embodiment of the metric computing part 100 includes a counter 111 for repeatedly counting 12 symbols in one symbol interval, a plurality of accumulators 112a to 112d for storing metric values according to counting of the counter 111, Euclidean distance difference computers 113a and 113b for computing difference of the input signal to each branch values and adding the computed differences to previous metric value, a comparison and selection part 114 for selecting smaller value at comparing outputs of Euclidean distance difference computers 113a and 113b, storing the selected value in the accumulator 112a and 112d, and applying the selected metric value and the survival path corresponding to the selected metric value to the optimal path computing part 200.

Herein, the accumulators 112a and 112d are arranged classified by each state and each includes 12 memories M1 to M12 for storing the metric values applied from the comparison and selection part 114 in serial order according to counting of the counter 111.

Operation of other embodiment of the metric computing part 100 having the foregoing system is to be explained hereinafter.

The Euclidean distance difference computers 113a and 113b computes differences of the input signal to each of the branch values and adds the computed differences to previous metric values applied from the accumulators 112a to 112d.

That is, the Euclidean distance difference computers 113a and 113b computes a difference of the input signal to each of the branch values, since branches applied to each state are two, and adds the computed differences to previous metric values applied from the accumulators 112a to 112d.

And smaller value of the outputs of the Euclidean distance difference computers 113a and 113b is selected on application to the comparison and selection part 114, and the path of the selected value is applied to the optimal path selection part 200 as a survival path and the selected output value, i.e., the selected metric value is stored in the accumulator 112a.

The metric values applied from the comparison and selection part 114 are stored in the memories M1 to M12 of the accumulator 112a in serial order according to counting of the counter 111. And these operations are carried out at each of the states with the accumulators 112a to 112d.

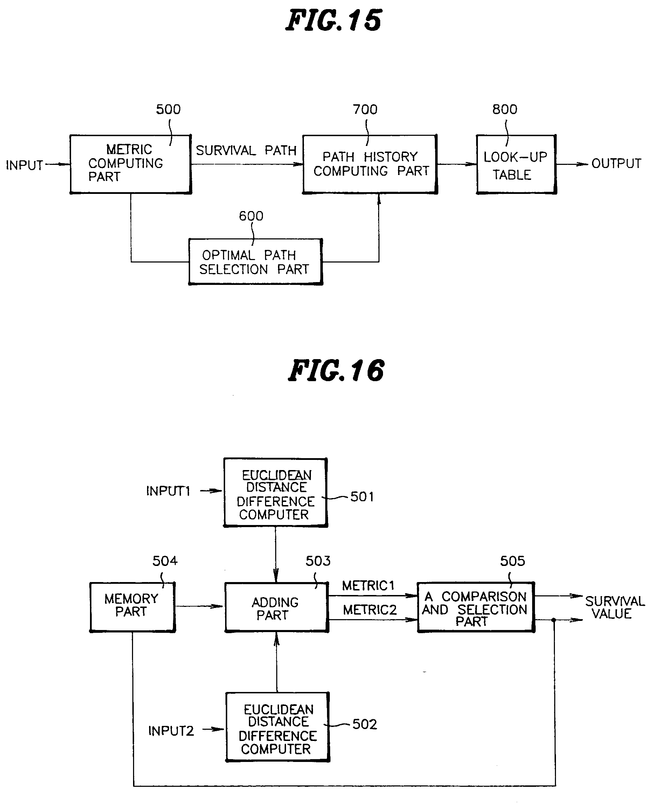

As shown in FIG.15, other embodiment of a HDTV Viterbi decoder in accordance with this invention includes a metric computing part 500, an optimal path selection part 600, a path history computing part 700, and a look up table 800.

The metric computing part 500 computes difference of the input signal to branch value and adds this difference to an accumulated previous metric value to obtain a survival path. Herein, the metric computing part 500 is arranged classified by each state.

The optimal path selection part 600 finds the optimal survival path from the accumulated metric values applied from the metric computing part 500.

The path history computing part 700 determines an output value within a observation region to be transmitted based on a pre state value and the present state value of each stage based on the survival path information applied from the metric computing part 500 and the optimal survival path information applied from the optimal path selection part 600.

The look up table 800 generates an input value of the Trellis encoder based on change of state value of each stage according to the output of the path history computing part 700.

As shown in FIG.16, the metric computing part 500 includes a plurality of Euclidean distance difference computers 501 and 502 for computing a difference of the input signal to each of the branch values, a memory part 504 for storing previous metric value, an adder 503 for adding each of the outputs of the Euclidean distance difference computers 501 and 502 to the previous metric value, and a comparison and selection part 505 for selecting a smaller value by comparing outputs of the adder 503.

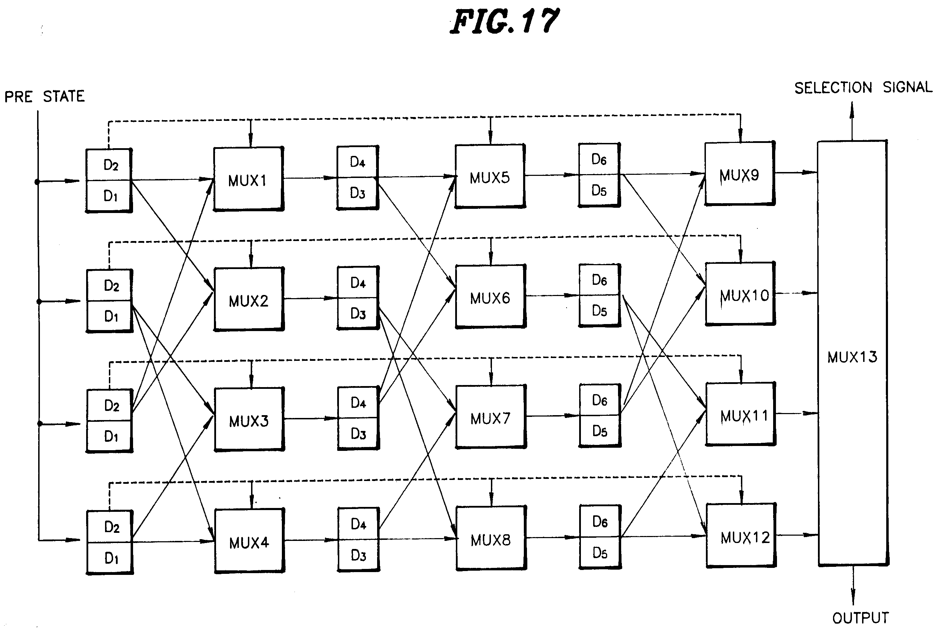

As shown in FIG.17, the path history computing part 700 includes a plurality of pre state memories D2, D4, and D6 for storing pre state values, a plurality of the present state memories D1, D3, and D5 for recording information related to the present state, a plurality of moving direction changing multiplexers MUX1 to MUX12 for changing movement direction of information stored in the present state memories D1, D3, and D5 under the control of the pre state value applied to the pre state memory D2 at the first stage of each state out of the plurality of pre state memories D2, D4, and D6, and a multiplexer MUX14 connected to the moving direction changing multiplexers MUX1 to MUX12 for transmitting the final output value of the optimal path within the observation region of the outputs of the moving direction changing multiplexers MUX1 to MUX12 at the final state of each state out of the plurality of the moving direction changing multiplexers MUX1 to MUX12 according to the optimal survival path information applied from the optimal path selection part 600.

The pre state memories D2, D4, and D6, the present state memories D1, D3, and D5, and the moving direction changing multiplexers MUX1 to MUX12 are arranged one to one matched to each stage and state.

Operation of other embodiment of the HDTV Viterbi decoder in accordance with this invention having the foregoing system is to be explained hereinafter.

The Euclidean distance difference computers 501 and 502 of the metric computing part 500 computes difference of the input signal and the branch value and applies the computed difference to the adder 503. The adder 503 adds the previous metric value stored in the memory part 504 to each of the values of the two branches applied from the Euclidean distance difference computers 501 and 502 and applies the added values to the comparison and selection part 505.

According to this, the comparison and selection part 505 selects one that has smaller metric value of the two branches, and applies the selected branch to the path history computing part 700 as a survival path and the metric value to the optimal path selection part 600.

Meantime, the metric computing part 500 being arrange classified by state transmits information on metric values and survival paths classified by state.

And the optimal path selection part 600 selects the path having the smallest metric value out of the paths applied thereto classified by each state as the optimal path. In this instant, in order to find the most optimal path, though the entire input should be compared to the entire paths, as it will cause too much delays and a hardware too much complicated, after observing a length of certain extent, an optimal path up to that section is taken.

And, the path history computing part 700 receives information on survival path, i.e., pre state of the path from the metric computing part 500. This pre state is applied to the pre state memory D2 and controls the moving direction changing multiplexers MUX1 to MUX12 on the same line.

And this pre state information is transmitted to the memories D4 and D6 at the following stages, and a new state received at the memory D2 controls the moving direction changing multiplexers MUX1 to MUX12 on the same line, again.

That is, each of the moving direction changing multiplexers MUX1 to MUX12 changes moving direction of information along the paths on the Trellis diagram under the control of the memory D2.

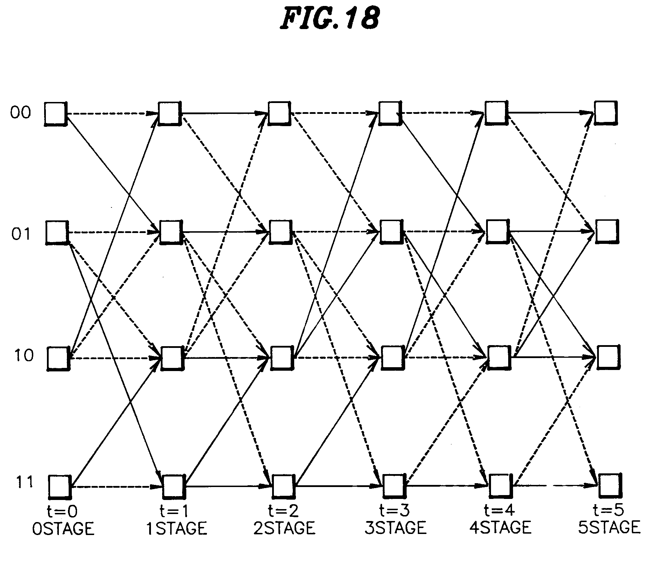

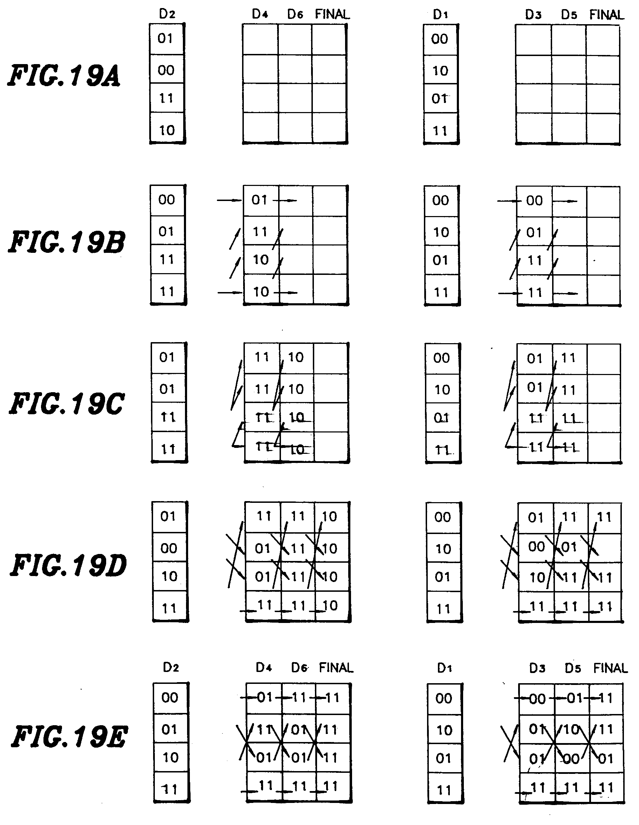

Meantime, in order to explain the path history computing part 700 in detail, in case a decoding diagram as shown in FIG.18 is assumed, operation of the 1 stage of t=1 will be as shown in FIG.19A.

And the memory D2 stores a pre state of the path to 1 stage, and the memory D1 stores information on the present state of labeling function.

And it comes to 2 stage of t=2, an operation as shown in FIG.19B occurs like the 2 stage of FIG.18. That is, direction of movement of the information stored before the information of the memory D2 is determined, and upon the same operation at the 2 stage is repeated at 3, and 4 stages, as shown in FIG.19D, a pre state 10 in the left, and a state 11, indicating the present state, in the right can be obtained at 4 stage by the optimal survival signal, i.e., by a selection signal selected at the optimal path selection part 600.

Based on these information, the look up table 800 can transmit a final bit. And FIG.19E shows operation of the path history computing part 700 at a 5 stage of t=5.

And the solid lines in FIG.18 indicate survival paths, and the arrows in FIGs.19s also indicate the survival paths of FIG.18 to help understanding of the operations.

As has been explained in the foregoing description, this invention has an advantages of facilitating use of a Viterbi decoder even in communication system having high symbol rate by embodying a Viterbi decoder having the same operation speed with the symbol rate with a simple system that uses a plurality of memory elements and multiplexers, and other additional logic.

Although the invention has been described in conjunction with specific embodiments, it is evident that many alternatives and variations will be apparent to those skilled in the art in light of the foregoing description. Accordingly, the invention is intended to embrace all of the alternatives and variations that fall within the spirit and scope of the appended claims.

## Claims

1. An HDTV Viterbi decoder comprising:
a metric computing means for computing differences of an input signal with values of each branch and computing a metric value and finding a survival path by adding the computed differences to an accumulated previous metric value;
an optimal path computing means for finding an optimal survival path within an observation region from the metric values computed at the metric computing means; and,
a path history computing means for successively transferring an output value found by passing the survival paths found at the optimal path computing means through a look-up table up to a final stage within the observation region under the control of the survival path, and taking a value corresponding to the optimal survival path out of the transferred values as the final value of the optimal path within the observation region.

2. The HDTV Viterbi decoder as claimed in claim 1, wherein the metric computing means includes,
an Euclidean distance difference computer for computing differences of the input signal with each of branch signal,
an accumulator for accumulating metric values, and
a plurality of memories for adding outputs of the Euclidean distance difference computer to a previous metric value and applying the added value to the optimal path computing means and the accumulator.

3. The HDTV Viterbi decoder as claimed in claim 2, wherein the plurality of memories includes 12 memories for storing outputs of the Euclidean distance difference computer for 12 periods.

4. The HDTV Viterbi decoder as claimed in claim 1, wherein the metric computing means are arranged classified by each state.

5. The HDTV Viterbi decoder as claimed in claim 1, wherein the optimal path computing means includes,
a plurality of path selectors each for selecting a path having a smaller metric value as a survival path by comparing the two metric values received from the metric computing means, and
an optimal survival path selector for selecting a path having the smallest metric value by comparing the outputs applied from the plurality of path selectors.

6. The HDTV Viterbi decoder as claimed in claim 5, wherein the path selectors are arranged classified by each state.

7. The HDTV Viterbi decoder as claimed in claim 1, wherein the path history computing means includes 12 blocks having the same function connected in parallel for being selected according to multiplexing functions.

8. The HDTV Viterbi decoder as claimed in claim 1, wherein the path history computing means includes,
a plurality of memory blocks for storing output values obtained by passing the survival paths applied from the optimal path computing part through a look-up table in serial order,
a plurality of moving direction changing multiplexers for changing moving direction of information stored in the memory blocks under the control of the survival path information applied from the optimal path computing means, and
a multiplexer for transmitting a final output value of the optimal path within the observation region of the outputs of the last stage multiplexers out of the moving direction changing multiplexers under the control of the survival path information applied from the optimal path computing means.

9. The HDTV Viterbi decoder as claimed in claim 8, wherein the path history computing means further includes a plurality of survival path information storing buffers for having the survival path information applied from the optimal path computing means stored therein and applied to each of the selection terminal of the plurality of moving direction changing multiplexers.

10. The HDTV Viterbi decoder as claimed in claim 9, wherein the survival path information storing buffers are arranged classified by each state.

11. The HDTV Viterbi decoder as claimed in claim 8, wherein the path history computing means further includes a plurality of delaying parts for having the outputs of the memory blocks stored in serial order therein.

12. The HDTV Viterbi decoder as claimed in claim 11, wherein the delaying parts has 12 FIFO(First In and First Out) type latches classified by each state.

13. The HDTV Viterbi decoder as claimed in claim 8, wherein the memory blocks have a plurality of buffers arranged one to one matched with each state and stage.

14. The HDTV Viterbi decoder as claimed in claim 1, wherein the metric computing means includes,
a counter for repeatedly counting 12 symbols in one symbol interval,
a plurality of accumulators for storing metric values according to counting of the counter,
Euclidean distance difference computers for computing difference of the input signal to each branch values and adding the computed differences to previous metric value, and
a comparison and selection part for selecting smaller value at comparing outputs of the Euclidean distance difference computers, storing the selected value in the accumulator, and applying the selected metric value and the survival path corresponding to the selected metric value to the optimal path computing means.

15. The HDTV Viterbi decoder as claimed in claim 14, wherein the accumulators are arranged classified by each state.

16. The HDTV Viterbi decoder as claimed in claim 14, wherein the accumulators includes 12 memories for storing the metric values applied from the comparison and selection part in serial order according to counting of the counter.

17. An HDTV Viterbi decoder comprising:
a metric computing means for computing differences of an input signal with values of each branch and finding survival paths by adding the computed differences to an accumulated previous metric value;
an optimal path selection means for finding an optimal survival path within an observation region from the metric values applied from the metric computing means; and,
a path history computing means for determining an output value of the observation region based on a pre state value and the present state value of each stage based on survival path information received from the metric computing means and the optimal survival path information received from the optimal path selection means.

18. The HDTV Viterbi decoder as claimed in claim 17, wherein the metric computing means includes,
a plurality of Euclidean distance difference computers for computing a difference of the input signal to each of the branch values,
a memory part for storing previous metric value,
an adder for adding each of the outputs of the Euclidean distance difference computers to the previous metric value, and
a comparison and selection part for selecting a smaller value by comparing outputs of the adder.

19. The HDTV Viterbi decoder as claimed in claim 17, wherein the metric computing means are arranged classified by each state.

20. The HDTV Viterbi decoder as claimed in claim 17, wherein the path history computing part includes,
a plurality of pre state memories for storing pre state values,
a plurality of the present state memories for recording information related to the present state,
a plurality of moving direction changing multiplexers for changing moving direction of information stored in the present state memories under the control of the pre state value applied to the pre state memory at the first stage of each state out of the plurality of pre state memories, and
a multiplexer for transmitting the final output value of the optimal path within the observation region of the outputs of the moving direction changing multiplexers at the final state of each state out of the plurality of the moving direction changing multiplexers according to the optimal survival path information applied from the optimal path selection means.

21. The HDTV Viterbi decoder as claimed in claim 20, wherein the pre state memories are arranged one to one matched to each stage and state.

22. The HDTV Viterbi decoder as claimed in claim 20, wherein the present state memories are arranged one to one matched to each stage and state.

23. The HDTV Viterbi decoder as claimed in claim 20, wherein the moving direction changing multiplexers are arranged one to one matched to each stage and state.
